**Europäisches Patentamt**

**European Patent Office**

**Office européen des brevets**

(19)

(11) Veröffentlichungsnummer: **0 005 168**
**B1**

(12) **EUROPÄISCHE PATENTSCHRIFT**

(45) Veröffentlichungstag der Patentschrift: **22.09.82**

(21) Anmeldenummer: **79100966.5**

(22) Anmeldetag: **30.03.79**

(51) Int. Cl.³: **A 61 K 33/18,** C 08 F 8/22,
A 01 N 43/36

(54) Verfahren zur Herstellung von Polyvinylpyrrolidon-Jod.

(30) Priorität: **28.04.78 DE 2818767**

(43) Veröffentlichungstag der Anmeldung:
**14.11.79 Patentblatt 79/23**

(45) Bekanntmachung des Hinweises auf die Patenterteilung:
**22.09.82 Patentblatt 82/38**

(84) Benannte Vertragsstaaten:
**BE CH DE FR GB IT LU NL SE**

(56) Entgegenhaltungen:
**DE - A - 2 016 086**
**DE - A - 2 439 197**
**FR - A - 2 290 914**
**GB - A - 836 868**

(73) Patentinhaber: **BASF Aktiengesellschaft**
**Carl-Bosch-Strasse 38**
**D-6700 Ludwigshafen (DE)**

(72) Erfinder: **Denzinger, Walter**
**Wormser Landstrasse 65**
**D-6720 Speyer (DE)**
Erfinder: **Schenck, Hans-Uwe, Dr.**
**Erlenweg 6**
**D-6706 Wachenheim (DE)**
Erfinder: **Schwarz, Wolfgang, Dr.**
**Benzstrasse 33**
**D-6700 Ludwigshafen (DE)**

Courier Press, Leamington Spa, England.

# 0 005 168

### Verfahren zur Herstellung von Polyvinylpyrrolidon-Jod

Die Erfindung betrifft ein Verfahren zur Herstellung des Reaktionsproduktes aus Polyvinylpyrrolidon und elementarem Jod, im allgemeinen als Polyvinylpyrrolidon-Jod, kurz PVP-Jod bezeichnet, das in steigendem Maße, wegen seiner germiciden, bakteriziden, fungiziden und desinfizierenden Eigenschaften Verwendung finde.

PVP-Jod kommt im allgemeinen als braunes Pulver in den Handel, das etwa 11% verfügbares Jod, d.h. wirksames Jod, das mit Natriumthiosulfat titrierbar ist, und darüber hinaus noch ca. 5,5% Jod in Form des Jodids enthält. Bei einem Jod: Jodid-Verhältnis von 2:1 ist im PVP-Jod-Komplex die Jodbindung so stark, daß Jodgeruch nicht mehr wahrnehmbar ist und ein in dem Gasraum über dem PVP-Jod eingebrachtes feuchtes Kaliumjodidstärkepapier nicht gefärbt wird. In der Praxis dient als Maß für eine befriedigend feste Jodbindung der Verteilungskoeffizient des Jods zwischen einer wäßrigen PVP-Jodlösung und Heptan, der, wie es beispielsweise in der US-PS 3 028 300 beschrieben wird, bei etwa 200 liegt. Ferner gilt die Forderung, daß das PVP-Jod in seinen Zubereitungen, insbesondere in wäßriger Lösung, bei der Lagerung möglichst wenig an verfügbarem Jod verliert, d.h. möglichst stabil ist.

Zur Herstellung eines möglichst stabilen PVP-Jods werden die verschiedensten Verfahrensmaßnahmen beschrieben, beispielsweise wird das pulverförmige PVP-Jod gemäß der DE-PS 10 37 075 einer nachträglichen längeren Temperaturbehandlung bei 90 bis 100°C unterworfen und in der US-PS 2 900 305 wird beschrieben, daß für die Herstellung eines geeigneten PVP-Jods ein PVP mit einem bestimmten Gehalt an Feuchtigkeit zu verwenden ist. Gemäß der US-PS 2 826 532 wird ein Zusatz von Natriumhydrogencarbonat und der US-PS 3 028 300 wird ein Zusatz von Jodid in Form von Jodwasserstoff oder Alkalijodid beschrieben. Die US-PS 3 898 326 lehrt den Zusatz von Jodwasserstoff oder Alkalijodiden zur wäßrigen PVP-Lösung und die Umsetzung des aus der Lösung nach Trocknung erhaltenen pulverförmigen PVP-Jodidgemisches mit Jod. In der DE-AS 24 39 197 wird beschrieben, daß ein in einem wasserfreien organischen Lösungsmittel polymerisiertes Polyvinylpyrrolidon zur Herstellung eines stabilen PVP-Jods besonders geeignet ist.

Die genannten Verfahren des Standes der Technik haben auch das Ziel, ein stabiles PVP-Jod wirtschaftlich herzustellen. Sie weisen jedoch auch beachtliche Nachteile auf. Gemäß der in der DE-PS 10 37 075 beschriebenen Verfahrensweise sind zur Bildung des PVP-Jod-Komplexes Temperzeiten bei Temperaturn von 90 bis 100°C von 18 bis 64 Stunden erforderlich, um ein beständiges Produkt mit einem Jod:Jodid-Verhältnis von 2:1 zu erhalten. Auch bei dem in der US-PS 2 900 305 beschriebenen Verfahren muß in der Regel 22 Stunden lang getempert werden. Die Temperung nach diesem Verfahren wird zusätzlich dadurch erschwert, daß durch den geforderten höheren Wassergehalt von 4 bis 15% des verwendeten Polyvinylpyrrolidons, wenn ein Verbacken der Mischung aus Polyvinylpyrrolidon und Jod vermieden werden soll, in der Praxis bei Temperaturen von unter 90°C getempert werden muß und dadurch gegenüber normalen pulverförmigen Polyvinylpyrrolidon, das üblicherweise einen Wassergehalt bis zu 5 Gew.% aufweist, noch längere Temperzeiten erforderlich werden.

Gemäß der Verfahrensweise der US-PS 3 028 300 wird das Tempern eingespart durch Zugabe von Jodid in Form von Alkalijodid oder Jodwasserstoffsäure zur Mischung von Polyvinylpyrrolidon und Jod. Auch dieses Verfahren ist nicht optimal, da inhomogene Mischungen entstehen, die nur eine schwache Jodbindung besitzen und daher stark nach Jod riechen. Die US-PS 3 898 326 lehrt daher den Zusatz von Jodiden zu einer wäßrigen Polyvinylpyrrolidon-Lösung, die anschließend getrocknet wird, und danach wird das pulverförmige Polyvinylpyrrolidon-Jodid-Gemisch ohne Temperatur mit Jod umgesetzt. Wird dem Polyvinylpyrrolidon gemäß US-PS 3 898 326 das Jodid als Jodwasserstoffsäure zugesetzt, entstehen bei der Trocknung beachtliche Korrosionsprobleme, wird dagegen das Jodid als Alkalijodid zugesetzt, entspricht das PVP-Jod, bedingt durch den Alkaligehalt, nicht mehr den strengen Anforderungen der Arzneimittelgesetze.

Auch gemäß der DE-AS 24 39 197 werden in der Regel 10-stündige Temperzeiten beschrieben, wobei jedoch, um Verteilungskoeffizienten von etwa 200 zu erhalten, mindestens 20-stündige Temperzeiten erforderlich sind.

Weiterhin sei angeführt, daß in der FR-OS 2 290 914 die Sterilisierung von Gegenständen, die mit menschlichem Gewebe in Berührung kommen, insbesondere Kontaktlinsen, mit einer wäßrigen Lösung eines Jodträgers, beispielsweise einer wäßrigen Lösung eines Polyvinylpyrrolidon-Jodkomplexes in Gegenwart eines langsam reagierenden Reduktionsmittels, wobei das Reduktionsmittel die Aufgabe hat, das nicht zur Sterilisation benötigte Jod des Jodträgers durch Reduktion zu Jodionen zu eliminieren und damit den überschüssigen Jodkomplex zu zerstören, beschrieben wird. Dabei ist die gestellte Aufgabe die die Zerstörung eines in wäßriger Lösung vorhandenen Jodkomplexes mit einem reduzierend wirkenden Agens.

Aufgabe der vorliegenden Erfindung ist es, ein Verfahren zur Herstellung eines insbesondere in seinen wäßrigen Lösungen stabilen PVP-Jods mit einem Jod:Jodid-Verhältnis von 2:1 und mit einem Verteilungskoeffizienten von 190 bis 250, zweckmäßig ca. 200, zu finden, bei dem die bekannten Nachteile, wie die langen Temperzeiten, vermieden werden. Nach Defence Medical Purchase

# 0 005 168

Description (Nr. 4, 1972) soll der Jodverlust einer wäßrigen PVP-Lösung mit einem Gehalt an verfügbarem Jod von 1% nach 14-tägiger Lagerung bei 52°C nicht mehr als 12% betragen. Das PVP-Jod muß selbstverständlich auch den Forderungen der Arzneibücher, wie der United States Pharmakopöe XIX, entsprechen.

Aufgabe der Erfindung ist insbesondere die Herstellung eines stabilen PVP-Jods mit einem niedrigmolekularen Polyvinylpyrrolidon mit K-Werten von unter 20, das nach dem Stand der Technik wegen des niedrigen Erweichungspunktes der Mischungen des niedermolekularen pulverförmigen Polyvinylpyrrolidons mit Jod nur mit unwirtschaftlich langen Umsetzungszeiten, die einen Abbau des Polymeren zur Folge haben können, herstellbar ist und dessen Stabilität in der Regel zu wünschen übrig läßt.

Erfindungsgemäß wird die Aufgabe gelöst, indem man die Herstellung des PVP-Jods durch Mischen von pulverförmigem Polyvinylpyrrolidon und Jod und anschließendem Tempern in Gegenwart eines die Jodidbildung beschleunigenden Stoffes erfolgt. Dafür sind solche Verbindungen besonders geeignet, die nach der Reaktion mit Jod neben dem Jodid gegebenenfalls Wasser und flüchtige Stoffe, wie Kohlendioxid oder Stickstoff, bilden.

Gegenstand der Erfindung ist daher ein Verfahren zur Herstellung eines stabilen PVP-Jods durch Umsetzung von pulverförmigem Polyvinylpyrrolidon mit elementarem Jod bei Temperaturen von 70 bis 100°C, dadurch gekennzeichnet, daß man die Umsetzung in Gegenwart von Ameisensäure, Oxalsäure oder eines Ammoniumsalzes oder Amids der Kohlen-, Ameisen- oder Oxalsäure als die Jodidbildung beschleunigender Zusatz durchführt.

Als die Jodidbildung beschleunigende Verbindungen kommen neben den genannten Säuren z.B. Ammoniumcarbonat, Ammoniumhydrogencarbonat, Ammoniumcarbaminat, Harnstoff Ammoniumformiat, Formamid, Ammoniumoxalat, Oxamidsäure oder Oxamid in Betracht.

Besonders bevorzugt sind Oxalsäure und Ameisensäure, die bei der Reaktion mit Jod neben Jodwasserstoff nur noch Kohlendioxid ergeben, sowie ihre Amide und Ammoniumsalze.

Die Menge an die Jodidbildung beschleunigendem Zusatz wird in der Regel so bemessen, daß bei vollständiger Umsetzung ein Fünftel bis ein Drittel des dem puverförmigen Polyvinylpyrrolidon zugemischten Jods zu Jodid umgesetzt wird. Sie liegt, berechnet auf das eingesetzte Jod, je nach Art des Zusatzes zwischen 2 und 30 Gew.%, bevorzugt 4 bis 22 Gew.%.

Der jodidbildende Zusatz wird beim Mischen des Polyvinylpyrrolidons mit dem Jod in herkömmlichen Pulvermischern, wie z.B. Taumel- oder Doppelkonusmischern, zweckmäßigerweise direkt beigemischt. Der erfindungsgemäße Zusatz kann auch zuerst mit dem Polyvinylpyrrolidon gemischt oder, wenn er beispielsweise in flüssiger Form vorliegt, wie z.B. Ameisensäure, direkt auf das Polyvinylpyrrolidon aufgesprüht werden, und danach erst erfolgt die Beimischung des Jods.

In einer bevorzugten Ausführungsform wird der die Jodidbildung beschleunigende Zusatz einer wäßrigen Polyvinylpyrrolidonlösung beigemischt und das getrocknete und den die Jodidbildung beschleunigenden Zusatz enthaltende Polyvinylpyrrolidon dann mit dem Jod umgesetzt.

Zweckmäßig verwendet man eine wäßrige Lösung, wie sie beispielsweise bei der Polymerisation des Vinylpyrrolidons und gegebenenfalls nach Durchführung einer Wasserdampfdestillation entsteht. Die anschließende Trocknung erfolgt nach an sich üblichen Methoden, z.B. Gefriertrocknung, Walzentrocknung oder Sprühtrocknung.

Zweckmäßigerweise erfolgt das Mischen des Polyvinylpyrrolidons mit dem erfindungsgemäßen Zusatz und Jod zunächst bei Raumtemperaturen oder leicht erhöhten Temperaturen bis etwa 50°C, bis das elementare Jod in das Polyvinylpyrrolidon diffundiert ist. Die Temperung zur Jodidbildung erfolgt dann bei 70 bis 100°C, wobei der für stabiles PVP-Jod charakteristische Verteilungskoeffizient von etwa 200 und ein Jod: Jodid-Verhältnis von 2:1 im allgemeinen nach 0,5 bis 9 Stunden erreicht werden und das erhaltene PVP-Jox einen verfügbaren Jodgehalt von 5 bis 20 Gew.% aufweist. Diese verkürzten Temperzeiten sind ein besonderer Vorteil des erfindungsgemäßen Verfahrens, und zusätzlich wird ein möglicher Abbau des Polyvinylpyrrolidons weitestgehend vermieden.

Das verwendete Polyvinylpyrrolidon hat üblicherweise einen K-Wert von 8 bis 50, wobei ein Bereich von 10 bis 35 bevorzugt ist. Das erfindungsgemäße Verfahren eignet sich in ganz besonderer Weise für ein Polyvinylpyrrolidon von einem K-Wert von 10 bis 20.

Ein für das erfindungsgemäße Verfahren besonders geeignetes Polyvinylpyrrolidon wird durch Polymerisation in einem organischen Lösungsmittel, wie Isopropanol oder Toluol, unter Verwendung von organischen Perverbindungen als Radikalbildner, wie z.B. Dialkylperoxiden, hergestellt und gegebenenfalls anschließend einer Wasserdampfdestillation unterworfen, wie es beispielsweise in der DE-OS 25 14 127 beschrieben wird.

Die verwendete Jodmenge beträgt in der Regel 5 bis 30 Gew.%, bevorzugt 10 bis 20 Gew.%, bezogen auf das Gesamtgewicht des PVP-Jods.

Die folgenden Beispiele erläutern die Erfindung. Angegebene Teile sind Gewichtsteile. Die K-Werte werden nach H. Fikentscher, Cellulose-Chemie, 13, 38—64 und 71—74 (1932) in wäßrigen Lösungen bestimmt. Die Bestimmung des Jodverlustes erfolgt durch 15-stündige Lagerung einer wäßrigen PVP-Jodlösung mit einem Gehalt an verfügbarem Jod von 1% bei 80°C. Die höhere Temperatur von 80°C hat den Vorteil, daß die umständlichere 14-tägige Lagerung bei 52°C umgangen werden kann und vergleichbare Werte erhalten werden. Der Verteilungskoeffizient (VK) wird bestimmt

3

# 0 005 168

gemäß US-PS 3 028 300 durch einminütiges intensives Schütteln von 1,0 ml einer wäßrigen PVP-Jodlösung mit einem verfügbaren Jodgehalt von 1,0%, mit 25 ml Heptan in einem verschlossenen Glaskolben in einem thermostatisierten Heizbad von 25,0°C. Nach einigen Minuten Stehen werden die beiden Phasen abgetrennt und der Jodgehalt der wäßrigen Phase durch Titration mit Natriumthiosulfat und der Jodgehalt der Heptanphase spektralphotometrisch bestimmt. Die Berechnung erfolgt gemäß folgender Gleichung:

$$VK = \frac{\text{mg Jod in } H_2O\text{-Phase}}{\text{mg Jod in Heptan}} \times \frac{\text{ml Heptan (25)}}{\text{ml } H_2O\text{-Phase (1)}}$$

Das in den Beispielen verwendete Polyvinylpyrrolidon wurde nach der folgenden Vorschrift analog DE-OS 25 14 127 hergestellt:

Herstellung von Polyvinylpyrrolidon
Beispiel I (K-Wert 31,5)

In einem Druckrührautoklaven werden 160 Teile Isopropanol und 80 Teile einer Mischung aus 700 Teilen Vinylpyrrolidon, 140 Teilen Isopropanol und 3,5 Teilen Ditertiärbutylperoxid vorgelegt. Anschließend wird auf 120°C aufgeheizt, wobei sich ein Überdruck von 2 bar einstellt, und die restliche Mischung innerhalb 3 Stunden in den Autoklaven zudosiert. Anschließend wird noch 3 Stunden auspolymerisiert, bis der Restgehalt an monomerem Vinylpyrrolidon unter 0,5% abgefallen ist. Nun wird mit 2 500 Teilen Wasser verdünnt und nach dem Abkühlen auf ca 80°C durch Einleiten von Wasserdampf das Isopropanol abdestilliert. Nach dem Erreichen von 98°C Übergangstemperatur wird noch mit 7000 Teilen Wasserdampf ausgeblasen und der Feststoffgehalt der Lösung auf 30% eingestellt. Der K-Wert des Polymeren beträgt 31,5. Für die Umsetzungen in fester Form mit Jod wird das Festprodukt durch Sprühtrocknung isoliert.

Beispiel II (K-Wert 16,6)

In einem Druckrührautoklaven werden 900 Teile einer Mischung aus 900 Teilen Vinylpyrrolidon, 2 100 Teilen Isopropanol und 36 Teilen Ditertiärbutylperoxid vorgelegt und auf 125°C erhitzt, wobei sich in der Apparatur ein Überdruck von 4,5 bar einstellt. Dann wird die restliche Mischung innerhalb 3 Stunden gleichmäßig zudosiert und anschließend 1 Stunde nacherhitzt, bis der Restgehalt an monomerem Vinylpyrrolidon weniger als 0,5% beträgt. Durch Entspannen wird nun auf 80°C abgekühlt; dabei werden ungefähr 1 500 Teile Isopropanol abdestilliert. Nun wird mit 300 Teilen Wasser verdünnt und durch Einleiten von Wasserdampf das Isopropanol vollständig abdestilliert. Nach dem Erreichen von 98°C Übergangstemperatur wird noch mit 900 Teilen Wasserdampf ausgeblasen. Der Feststoffgehalt der Lösung wird auf 40% eingestellt. Der K-Wert des Polymeren beträgt 16,6. Für die Umsetzungen in fester Form mit Jod wird das Festprodukt durch Sprühtrocknung isoliert.

Vergleichsbeispiel: Arbeitsweise nach dem Stand der Technik ohne jodidbildenden Zusatz

A) In einem Taumelmischer werden 83 Teile pulverförmiges PVP vom K-Wert 31,5 und einem Wassergehalt von 2,7% mit 17 Teilen Jod 1 Stunde bei Raumtemperatur und 2 Stunden bei 50°C gemischt. Anschließend wird der Ansatz auf 100°C erhitzt und nach verschiedenen Zeiten werden Proben entnommen und deren verfügbarer Jodgehalt, Verteilungskoeffizient und Jodverlust bestimmt. Die erhaltenen Ergebnisse sind nachfolgender Tabelle zu entnehmen.

TABELLE 1

| Temperzeit bei 100°C [Std.] | verfügbarer Jodgehalt [%] | Verteilungs-koeffizient | Jodverlust nach 15 Std. 80°C [%] |
|---|---|---|---|
| 2 | 14,4 | 25 | 3,8 |
| 8 | 12,5 | 89 | 3,8 |
| 10 | 12,0 | 112 | 4,0 |
| 12 | 11,8 | 134 | 4,1 |
| 17 | 11,5 | 177 | 5,1 |
| 22 | 11,0 | 196 | 6,4 |

B) In einem Doppelkonusmischer werden 249 Teile pulverförmiges PVP vom K-Wert 16,6 und einem Wassergehalt von 1,8% mit 51 Teilen elementarem Jod 1 Stunde bei Raumtemperatur und 2 Stunden bei 50°C gemischt. Zur Vermeidung von Verklumpungen wird anschließend 2 Stunden bei 70°C getempert und dann auf 85°C erhöht.

Höhere ·Temperaturen sind wegen Klumpenbildung nicht möglich. Nach verschiedenen Zeiten werden Proben entnommen und der verfügbare Jodgehalt, Verteilungskoeffizient und Jodverlust bestimmt. Die erhaltenen Ergebnisse können der nachfolgenden Tabelle entnommen werden.

4

## TABELLE 2

| Temperzeit bei 85°C [Std.] | verfügbarer Jodgehalt [%] | Verteilungs- koeffizient | Jodverlust nach 15 Std. 80°C [%] |
|---|---|---|---|
| 15 | 12,8 | 77 | 8,8 |
| 20 | 12,0 | 99 | 9,6 |
| 35 | 11,2 | 190 | 10,2 |
| 40 | 10,9 | 199 | 11,8 |

Beide Vergleichsbeispiele zeigen, daß mit PVP vom K-Wert 31,5 und PVP vom K-Wert 16,6 mit steigender Temperzeit eine Abnahme des verfügbaren Jodgehaltes und eine Zunahme des Verteilungskoeffizienten erfolgt. Im Hinblick auf den Verteilungskoeffizienten muß wenigstens 17 Stunden lang getempert werden, und es ist deutlich erkennbar, daß durch lange Temperung eine Schädigung des Produktes, kenntlich an der Zunahme des Jodverlustes, auftritt. Insbesondere zeigen sich die Nachteil bei einem PVP mit niederem K-Wert.

Erfindungsgemäßes Verfahren

Beispiel 1

In einem Taumelmischer werden 82,5 Teile PVP vom K-Wert 31,5 und einem Wassergehalt von 2,7% mit 3,5 Teilen Ammoniumhydrogencarbonat 0,5 Stunden gemischt, dann werden 17,5 Teile elementares Jod zugesetzt und 1 Stunde bei Raumtemperatur und 2 Stunden bei 50°C gemischt. Anschließend wird noch 8 Stunden lang bei 100°C erhitzt. Die Prüfung des erhaltenen PVP-Jods ergibt:

| | |
|---|---|
| verfügbarer Jodgehalt: | 11,3% |
| Jodidgehalt: | 5,6% |
| Verteilungskoeffizient: | 204 |
| Jodverlust: | 5,3% |

Beispiel 2

In einem Taumelmischer werden 249 Teile PVP vom K-Wert 31,5 und einem Wassergehalt von 2,7% mit 3,5 Teilen pulverförmiger Oxalsäure krist. $((COOH_2)_2 \cdot 2H_2O)$ und 51 Teilen elementarem Jod 2 Stunden bei Raumtemperatur und 2 Stunden bei 50°C gemischt. Anschließend wird noch 7 Stunden lang bei 100°C erhitzt. Die Prüfung des erhaltenen PVP-Jods ergibt:

| | |
|---|---|
| verfügbarer Jodgehalt: | 11,1% |
| Verteilungskoeffizient: | 205 |
| Jodverlust: | 3,8% |

Beispiel 3

In einem Taumelmischer werden auf 249 Teile PVP vom K-Wert 16,6 und einem Wassergehalt von 1,8% langsam unter Rühren 2,7 Teile einer 98% igen Ameisensäure äußerst fein über eine Düse aufgesprüht. Anschließend werden nach 1 Stunde Mischen 51 Teile elementares Jod zugesetzt. Es werden 1 Stunde bei Raumtemperatur und 2 Stunden bei 50°C gemischt und anschließend 2 Stunden bei 70°C und 6 Stunden bei 85°C getempert. Die Prüfung des erhaltenen PVP-Jods ergibt:

| | |
|---|---|
| verfügbarer Jodgehalt: | 10,2% |
| Verteilungskoeffizient: | 197 |
| Jodverlust: | 10,5% |

Beispiel 4

1 000 Teile einer 30% igen wäßrigen Lösung von Polyvinylpyrrolidon vom K-Wert 31,5 werden 3,75 Teile Ameinsensäure (98% ig) beigemischt und der pH-Wert der Lösung mit 6,2 Teilen wäßrigem Ammoniak (ca. 25%) auf 7,2 eingestellt. Die Lösung wird bei 160°C Lufteingangstemperatur und 100°C Luftausgangstemperatur in einen Zerstäubungstrockner versprüht. Der Wassergehalt des gebildeten Trockenproduktes beträgt 2,4% und der Gesamtgehalt an Ameisensäure 1,1%, wovon 0,9% in freier Form und 0,2% als Ammoniumsalz vorliegen.

In einem Taumelmischer werden dann 249 Teile des ameisensäurehaltigen PVP mit 51 Teilen elementarem Jod 1 Stunde bei Raumtemperatur und 2 Stunden bei 50°C gemischt und anschließend 4 Stunden bei 100°C getempert. Die Prüfung des erhaltenen PVP-Jods ergibt:

| | |
|---|---|
| verfügbarer Jodgehalt: | 11,4% |
| Verteilungskoeffizient: | 198 |
| Jodverlust: | 3,7% |

Beispiel 5

500 Teile einer 40% igen wäßrigen Lösung von Polyvinylpyrrolidon vom K-Wert 16,6 werden 4 Teile Ameisensäure (98% ig) beigemischt. Die Lösung wird bei 140°C Lufteingangstemperatur und 80°C Luftausgangstemperatur in einem Zerstäubungstrockner versprüht. Der Wassergehalt des Trockenprodukts beträgt 1,9% und der Ameisensäuregehalt 1,2%.

124,5 Teile des ameisensäurehaltigen PVP werden mit 25,5 Teilen elementarem Jod 1 Stunde bei Raumtemperatur und 2 Stunden bei 50°C gemischt und anschließend 2 Stunden bei 70°C und 6 Stunden bei 85°C getempert. Die Prüfung des erhaltenen PVP-Jods ergibt:

| | |
|---|---|
| verfügbarer Jodgehalt: | 11,1% |
| Verteilungskoeffizient: | 207 |
| Jodverlust: | 9,8% |

Beispiel 6

667 Teil einer 30% igen wäßrigen Lösung von Polyvinylpyrrolidon vom K-Wert 31,5 werden mit 5 Teilen Formamid vermischt. Die Lösung wird bei 160°C Lufteingangstemperatur und 100°C Luftausgangstemperatur in einem Zerstäubungstrockner versprüht. Der Wassergehalt des Trockenprodukts beträgt 3,2% und der Formamidgehalt 1,2%. 124,5 Teile dieses Polyvinylpyrrolidons werden mit 25,5 Teilen· elementarem Jod 1 Stunde bei Raumtemperatur und 2 Stunden bei 50°C gemischt und anschließend 4 Stunden bei 100°C getempert. Die Prüfung des erhaltenen PVP-Jods ergibt:

| | |
|---|---|
| verfügbarer Jodgehalt: | 11,5% |
| Verteilungskoeffizient: | 201 |
| Jodverlust: | 3,0%. |

**Patentansprüche**

1. Verfahren zur Herstellung von Polyvinylpyrrolidon-Jod durch Umsetzung von pulverförmigen Polyvinylpyrrolidon mit elementarem Jod bei Temperaturen von 70 bis 100°C, dadurch gekennzeichnet, daß man die Umsetzung in Gegenwart von Ameisensäure, Oxalsäure oder eines Ammoniumsalzes oder Amids der Kohlen-, Ameisen- oder Oxalsäure als die Jodidbildung beschleunigender Zusatz durchführt.

2. Verfahren nach Anspruch 1, dadurch gekennzeichnet, daß die Umsetzung in Gegenwart von Ameisensäure oder Oxalsäure, ihrer Ammoniumsalze oder Amide erfolgt.

3. Verfahren nach Anspruch 1, dadurch gekennzeichnet, daß man den die Jodidbildung beschleunigenden Zusatz einer wäßrigen Polyvinylpyrrolidonlösung beimischt und das getrocknete und den die Jodidbildung beschleunigenden Zusatz enthaltende Polyvinylpyrrolidon dann mit dem Jod umgesetzt wird.

4. Verfahren nach Anspruch 1, dadurch gekennzeichnet, daß main ein Polyvinylpyrrolidon vom K-Wert 10 bis 35 umsetzt.

**Revendications**

1. Procédé de préparation d'une polyvinyl-pyrrolidone iodée par réaction d'une polyvinyl-pyrrolidone pulvérulente à des températures de 70 à 100°C avec de l'iode élémentaire, caractérisé en ce que l'on effectue la réaction en présence d'acide formique ou d'acide oxalique ou d'un sel d'ammonium ou d'un amide de l'acide carbonique, de l'acide formique ou de l'acide oxalique en tant qu'additif accélérant la formation d'iodure.

2. Procédé suivant la revendication 1, caractérisé en ce que la réaction est effectuée en présence d'acide formique ou d'acide oxalique ou d'un sel d'ammonium ou d'un amide de ces acides.

3. Procédé suivant la revendication 1, caractérisé en ce que l'additif accélérant la formation d'iodure est ajouté à une solution aqueuse de la polyvinyl-pyrrolidone et on fait réagir avec l'iode la polyvinyl-pyrrolidone séchée, contenant l'additif accélérant la formation d'iodure.

4. Procédé suivant la revendication 1, caractérisé en ce que la polyvinyl-pyrrolidone employée possède une valeur K entre 10 et 35.

**Claims**

1. A process for the preparation of PVP-iodine by reacting polyvinylpyrrolidone powder with elementary iodine at from 70 to 100°C, characterized in that the reaction is carried out in the presence of formic acid, oxalic acid or an ammonium salt or amide of carbonic acid, formic acid or oxalic acid, as the additive which accelerates the formation of iodide.

2. A process as claimed in claim 1, characterized in that the reaction is carried out in the presence of formic acid or oxalic acid, their ammonium salts or their amides.

3. A process as claimed in claim 1, characterized in that the additive which accelerates the formation of iodide is mixed into an aqueous polyvinylpyrrolidone solution, and the dried polyvinylpyrrolidone containing the additive which accelerates the formation of iodide is then reacted with the iodide.

4. A process as claimed in claim 1, characterized in that a polyvinylpyrrolidone having a K value of from 10 to 35 is reacted.